Europäisches Patentamt

European Patent Office

Office européen des brevets

(19)

(11) Veröffentlichungsnummer: **0 301 204 B1**

# EUROPÄISCHE PATENTSCHRIFT

(12)

(45) Veröffentlichungstag der Patentschrift: **18.09.91**

(21) Anmeldenummer: **88108888.4**

(22) Anmeldetag: **03.06.88**

(51) Int. Cl.⁵: **F16L 55/16, B29C 63/36**

(54) **Schlauch für die Innenerneuerung von Rohrleitungen und Verwendung desselben.**

(30) Priorität: 29.07.87 CH 2901/87
27.11.87 CH 4618/87
06.05.88 CH 1744/88

(43) Veröffentlichungstag der Anmeldung:
**01.02.89 Patentblatt 89/05**

(45) Bekanntmachung des Hinweises auf die
Patenterteilung:
**18.09.91 Patentblatt 91/38**

(84) Benannte Vertragsstaaten:
**AT BE CH DE ES FR GB GR IT LI LU NL SE**

(56) Entgegenhaltungen:
EP-A- 0 122 246       EP-A- 0 168 053
EP-A- 0 209 396       EP-A- 0 213 209
EP-A- 0 228 998       US-A- 4 009 063
US-A- 4 135 958

(73) Patentinhaber: **SOFTLINING AG Systems for**
**Relining**
**Am Rain 387**
**CH-5732 Zetzwil(CH)**

(72) Erfinder: **Haller, Lorenz**
**Bergstrasse 137**
**CH-5732 Zetzwil(CH)**
Erfinder: **Moll, Rolf**
**von May Strasse 35**
**CH-3604 Thun(CH)**

(74) Vertreter: **Maspoli, René A.**
**PATENTANWALTSBUREAU R.A. MASPOLI**
**Postfach 191**
**CH-8053 Zürich(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegend beschriebene Erfindung betrifft ein Verfahren zur Innenerneuerung von auch nichtbegehbaren Rohrleitungen, bei dem in eine freie oder verlegte derartige Leitung mit beliebigem Innenquerschnitt ein im voraus mit einem aushärtbaren Harz getränkter, flexibler, optimal armierter Erneuerungsschlauch eingezogen wird, bei dem der genannte Schlauch aufgeblasen und so von innen an die Innenwand der zu erneuernden Leitung gepresst wird, und bei dem das Harz anschliessend in situ ausgehärtet wird.

Die ökologischen Probleme, welche durch Undichtheiten in verlegten Wasserleitungen entstehen können, sind bekannt. Gleichzeitig werden auch die gesetzlichen Vorschriften in diesem Gebiet immer zwingender (Verursacherhaftung). Ebenso ist zu beachten, dass in den meisten Fällen die Innenerneuerung solcher Leitungen kostenmässig günstiger sein kann als das Ersetzen derselben.

Eine wichtige hiezu verwendete Technologie beruht dabei auf dem Einlegen eines mit Reaktivharz getränkten flexiblen Schlauches in die defekte Leitung und, nach Anpressen des Schlauches an die Innenwand, auf dem Aushärten des Schlauches.

Im EP-Gesuch, Ver. Nr. 0 228 998, werden ein Verfahren und eine Vorrichtung zur Sanierung von verlegten Rohrleitungen gelehrt und beansprucht. Die mehrlagigen Ausbesserungsschläuche werden über Rollen bei Normaldruck durch eine Wanne geführt, sie sollen darin mit Reaktivharz getränkt werden. Nach Verlegen des getränkten Schlauches in die auszubessernde Leitung wird er unter Druck gesetzt und mittels direkter UV-Bestrahlung oder mittels einer Durchlaufvorrichtung, die energiereiche Strahlung abgibt, ausgehärtet. Dem Einbringen des Schlauches wird besondere Achtung geschenkt, dieser Verfahrensschritt kann gemäss dem hier besprochenen EP-Gesuch auf mindestens zwei verschiedene Arten ausgeführt werden. Der Auswahl der und der Optimierung der in dieser Technologie wirklich relevanten Verfahrensschritte, d.h. der optimalen Armierung, der genügend gleichmässigen Tränkung des Schlauches und der gleichförmigen Aushärtung des Harzes unter Temperaturkontrolle zur Erreichung einer qualitativ einwandfreien Ausbesserung, wird in dieser Schrift keine spezielle Beachtung zuteil.

In der FR-Patentanmeldung Nr. 75 01 834 (Ver. Nr. 2 258 581) wird ein Verfahren zum Einbringen eines flexiblen Schlauches zur Abdichtung von verlegten Gasleitungen gelehrt. Der flexible, gasdichte Schlauch wird oben mittels Leim an die obere Innenseite der Leitung geklebt. Eine Imprägnierung des gesamten Schlauches und auch eine Aushärtung des Schlauches an der Innenwand der Leitung finden nicht statt. Der eingezogene flexible Kunststoffschlauch wird anscheinend durch den Gasdruck an die Leitung angepresst.

Speziell die Optimierung hinsichtlich Abdichtung und/oder Verstärkung bei solchen Innenerneuerungen mittels Ausbesserungsschläuchen, in denen die Armierungsschicht richtungs- und stärkemässig an die gegebenen Schäden bzw. angestrebten Erneuerungen angepasst ist, wird in diesem EP-Gesuch weder gelehrt noch nahegelegt.

Die FR-Patentanmeldung 83 03 991 (Ver. Nr. 2 542 416) beschreibt und beansprucht einen speziellen, mehrlagigen, dichten Schlauch zur Ausbesserung von bestehenden Leitungen. Eine Lage des Schlauches enthält eine thermisch polymerisierbare Masse und eine andere elektrisch leitende Fasern oder Gewebe. Nach dem Einbringen des flexiblen Schlauches in die Leitung wird derselbe aufgeblasen, die elektrisch leitende Lage mit Strom beschickt und so die Polymerisation, d.h. die Versteifung der Schlauchwand herbeigeführt. Der Schlauch liegt üblicherweise nicht an der Leitungsinnenseite an; die Undichtheit muss speziell abgedichtet werden.

Dem Verfahren gemäss EP, Ver. Nr. 0 082 212, liegt ein Schlauch, der unter Luftdruckeinwirkung in eine auszubessernde Leitung eingestülpt wird, zugrunde. Der Schlauch weist eine Filzlage auf, die beim Umstülpvorgang evakuiert wird. Am gleichen Ort liegt -vor dem Schlauch in Bewegungsrichtung - die Harzmasse für die gesamte Tränkung und Belegung vor, und es wird ständig Harz in die evakuierte Filzmasse eingezogen, und auch in den Rand zwischen Schlauch und Leitung gepresst. Die Filzlage enthält den Katalysator zur Beschleunigung der Aushärtung des Harzes. Dieses Verfahren scheint vor allem für senkrechte Leitungen zur Ausbesserung von unten nach oben geeignet und die Kontrolle der Filztränkung ohne direkte Einsichtmöglichkeit und bei an sich voneinander unabhängiger Einstülpgeschwindigkeit des Schlauches und Evakuierungsleistung am Filz führt anscheinenend zu keinen Schwierigkeiten.

Das EP-Gesuch, Ver. Nr. 0 168 053, lehrt und beschreibt ein Verfahren zur Aushärtung eines in eine Leitung eingestülpten Schlauches, der in einer Filzlage eine photopolymerisierbare Harzmasse enthält. Am inneren Ende des eingestülpten und aufgeblasenen oder mit Wasser gefüllten Schlauches befindet sich eine Rolle, an der ein Zug für Belichtungsvorrichtungen befestigt wird. Wesentlich scheint die wasserdichte Ausführung der Belichtungsvorrichtung zu sein.

Gegenstand des US Patentes 4 009 063 ist ein Verfahren zur Imprägnierung, Positionierung und Aushärtung eines ein harzgetränktes Vlies enthaltenden Reparaturschlauches für verlegte Leitungen. Hauptsächlich werden darin der Aufbau und das Einbringen des Reparaturschlauches abgehandelt.

Im US Patent 4 135 958 wird die Harzträkung während der Einstülpung gelehrt.

Das US Patent 4 439 469 lehrt die Zugabe eines Initiators in die aushärtbaren Harze der Reparaturschläuche gemäss dem Stand der Technik.

In den US Patenten 4 581 247 und 4 680 066 schliesslich wird die Aushärtung des eingestülpten, mit Harz getränkten Schlauches auch mittels eines u.a. in der Einstülpflüssigkeit verwendbaren Strahlenroboters gelehrt und beansprucht.

Gemäß der Erfindung wird der Mehrschichten-Kunststoffschlauch nach dem Anspruch 1 vorgeschlagen.

Die genannte Mehrschichten-Kunststoffplane kann also so gestaltet werden, dass, bei Anwendungen auf gewölbten Unterlagen, die jeweiligen Lagen, Stärken und Unterbrüche von Schuss und Kette den geometrischen Gegebenheiten der Unterlage und den gesuchten Festigkeiten angepasst sind.

Ebenso kann erreicht werden, dass, bei Anwendung zur Innenerneuerung von Röhren, die Armierungsschicht in Form von Längs- und Quer-Fäden mit Abständen, Zwischenräumen und Unterbrechungen vorliegt, so, dass, nach Verschweissung oder Verklebung der Plane zu einem Schlauch, derselbe zur Innen-Erneuerung von Leitungen auch bei geringen Durchmesserveränderungen und leichten Krümmungen der Leitungen eingesetzt werden kann.

Gemäß der Erfindung wird die Anwendung des Mehrschichten-Kunststoffschlauches nach dem Anspruch 3 vorgeschlagen.

Das erfindungsgemässe Verfahren wird nun, anhand von Anwendungsbeispielen und anhand der dabei eingesetzten Vorrichtungen, näher erläutert:

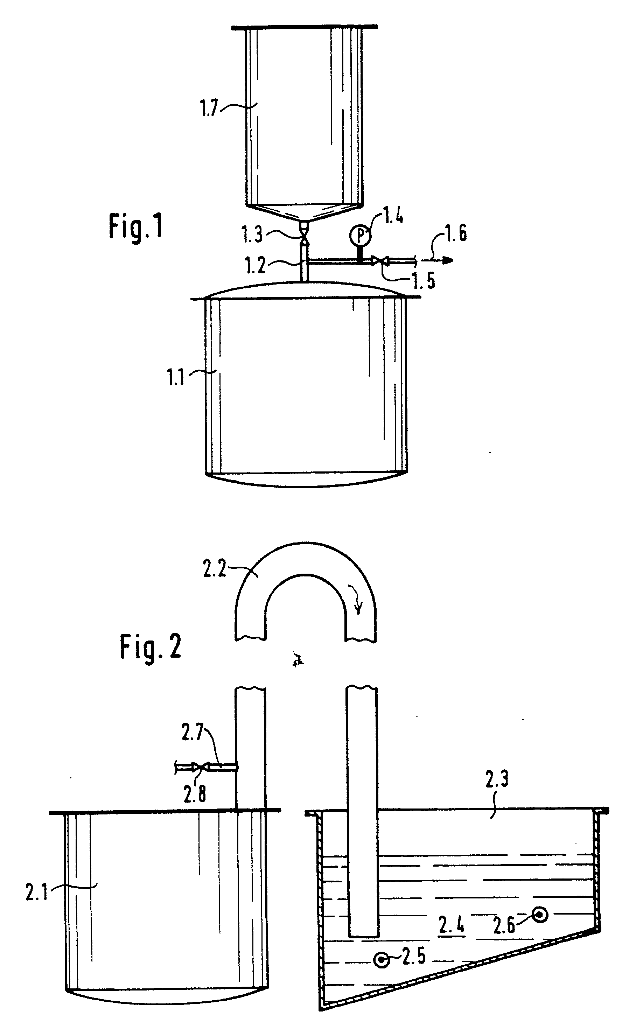

Die eine der hier beschriebenen Vorrichtungen (Figur 1) zum Tränken der Mehrlagenplane umfasst einen Druckbehälter 1.1 zur Aufnahme der aufgewickelten Plane, am Behälter mindestens eine Absaugleitung 1.6 zur Unterdruck- bzw. Vakuumpumpe und Messgeräte 1.4 zur Unterdruckkontrolle und auf den Behälter aufgesetzt einen kolonnenförmigen Harzbehälter 1.7, dessen Inhalt mittels Schleusenventilen 1.3 und 1.5 derart in den Behälter für den Planenwickel eingelassen werden kann, dass dabei keine Luft mit der Plane in Berührung kommt.

Die andere Vorrichtung zum Tränken der Mehrlagenplane (Figur 2) umfasst einen Druckbehälter 2.1 zur Aufnahme der aufgewickelten Plane, auf dem Behälter eine Unterdrucksicherung in Form einer umgekehrten, hohen U-förmigen Leitung 2.2, welche Leitung in die offene Wanne 2.3 mit dem Harz taucht 2.4, wobei, wenn im Druckbehälter Unterdruck herrscht, das Harz im Leitungsteil über der Wanne nicht bis zum Scheitel der U-förmigen Leitung steigt.

Zur Tränkung des Mehrlagenschlauches wurde dieser durch die U-förmige Steigleitung aus dem Druckbehälter abgezogen, in der Wanne mit Harz getränkt und an der Rolle 2.6 unterhalb des Flüssigkeitsniveaus abgequetscht.

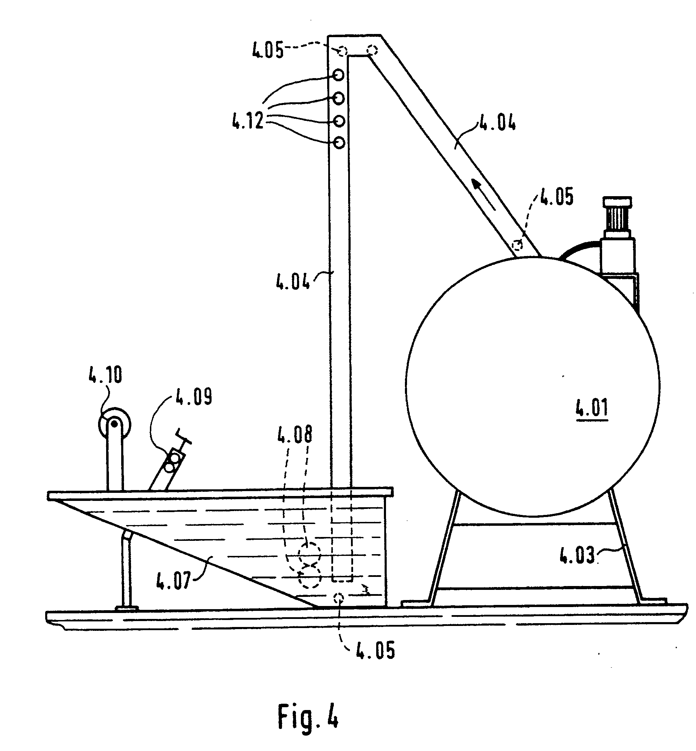

Die Tränkungsanlage gemäss Figur 4 schliesslich enthält einen Rundbehälter 4.01 auf einem Sockel 4.03 und einen Materialaustrittskanal 4.04, durch welchen der Schlauch in Pfeilrichtung und über die Rollen 4.05 dem Rundbehälter entnommen wird, wonach der Schlauch in die Wanne 4.07 geführt wird und dort zwischen den Walzen 4.08 im Harzbad abgequetscht und dann in 4.09 vom überschüssigen Harz befreit wird. Ueber die Rolle 4.10 wird er abgezogen, wobei durch den Unterdruck im Rundbehälter 4.01 das Harz im senkrechten Teil des Materialaustrittskanals 4.04 auf ein Niveau über dem Harzspiegel in der Wanne 4.07 steigt, welches Niveau durch die Schaugläser 4.12 kontrolliert wird.

Zur Illustration wird nun die Revision einer verlegten Abwasserleitung aus Gusseisenröhren, $\varnothing_i$ 40 cm, kurz und allgemein beschrieben.

Vorerst wurden dazu Versuche an einem 8 m langen PVC-Rohr des gleichen Innendurchmessers durchgeführt. Ein Schlauch von ca. 9 m Länge mit einer Innenlage aus durchsichtiger, gelochter PVC-Folie (0,3 mm; verschweisst) und einer mittleren Lage (ca. 2.8 mm dick; verklebt) und einer Aussenlage aus UV-undurchlässiger PVC-Folie (1.1 mm; verschweisst) wurde hergestellt und aufgewickelt. Der Wickel wurde in einen 80-1-Autoklaven gegeben, auf dem, als Aufsatz, der Harzbehälter (ca. 30 1) befestigt war. Der Harzbehälter war über eine 5.08 cm (2")-Leitung mit dem Autoklaven verbunden. In dieser Verbindungsleitung befanden sich ein Absperr-Kugelventil und eine Absaugleitung auf einer Vakuumpumpe. Der Autoklav wurde auf einen Druck von ca. 0.8 bar (0,8 atm.) abs. ausgepumpt und etwa 10 min lang auf diesem Druck gehalten. Nach Absperren der Pumpenleitung wurde der Kugelhahn zum Harzbehälter langsam geöffnet. Nachdem das Harz (ein handelsübliches, mittels UV polymerisierbares Polyesterharz) in den Autoklaven geflossen war, verblieb ein Rest davon auf dem Boden des Harzbehälters. Der Schlauch war also ohne Luftzutritt mit dem Harz getränkt worden. Nach einigen Minuten wurde der Behälter geöffnet, und der Schlauch wurde durch eine Rollenpresse in einem Harzbad abgequetscht.

Das eine Ende des getränkten Schlauches wurde nun auf einer runden Halteplatte befestigt. Diese war mit Luftdurchtrittsstutzen und zentraler, abgedichteter Leinendurchführung versehen. Nach dem Einziehen des Schlauches (am freien Ende) in die unterirdisch verlegte, revisionsbedürftige Leitung wurde die Bestrahlungsvorrichtung eingeführt und der Schlauch auch am zweiten Ende auf eine Befestigungsplatte (packer) aufgezogen, am Leitungsende festgemacht und aufgeblasen. Mittels der Zugleine wurde die Bestrahlungsvorrichtung, die auf Rädern lief, zum einen Ende der Leitung gebracht und von dort an der Bewegungsleitung (die zugleich auch das Elektrokabel war) mit einer Geschwindigkeit von ca. 3 m/min zum anderen Leitungsende bewegt. Dies wurde 3 mal wiederholt. Die Temperatur der Leitungsaussenwand stieg dabei nirgends über 60° C. Berechnet wurde eine maximale Temperatur von abbindendem Harz von 85° C Diese Temperatur würde im verlegten Gusseisenrohr (bei gleichen Verfahrensparameter) also jedenfalls tiefer liegen.

Nach Abbruch der Ausbesserungsvorrichtung und der Entfernung der innersten Folie der Erneuerungsschicht ergab die Inspektion der Innenwand der Leitung eine genügend gleichmässige Beschichtung mit festem Harz, das rundherum durchgehend abgehärtet war. Die Harzschicht war in der Sohle der Leitung einwandfrei und gleichmässig ausgehärtet.

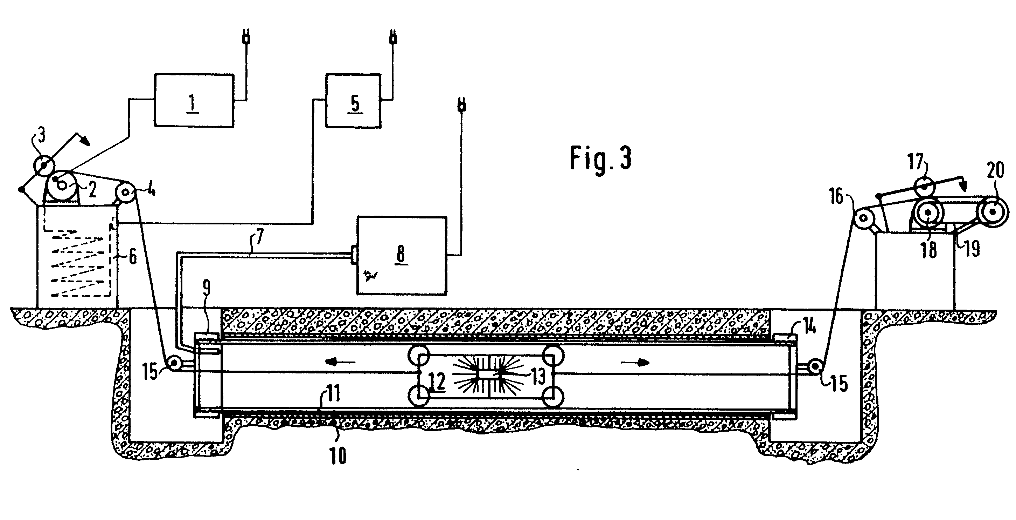

Auch die Steuerung und Funktion der Bestrahlungsvorrichtung im ausgelegten Rohr sind erfindungswesentlich; diese sind in der Figur 3 schematisch dargestellt. Die Positionen darin bedeuten:

Pos. 1: Steuergerät für Zugseinrichtungen: Diese Steuerung (Frequenzumwandler) ermöglicht, die Zuggeschwindigkeit stufenlos und ohne Kraftverlust im Verhältnis 1 : 3 zu regulieren. Der Sekundäranschluss ist steckbar und für beide Zugapparate verwendbar. Primär 220 V, Sekundär 3 x 220 V; Ausführung spritzwassersicher.

Pos. 2: Getriebemotor: Ein ganz normaler Drehstrommotor 3 x 220 V, der ein optimales Drehmoment aufweist. Die Getriebeachse ist mit einer Zug- und einer Leerlaufscheibe ausgerüstet, welche abwechslungsweise für Voroder Rückzug benützt werden, Ausführung spritzwassersicher.

Pos. 3: Anpressrolle: Sie ist auf ein separates Gestänge mit Druckfeder montiert und kann mittels einer einstellbaren Halterung fixiert werden.

Pos. 4: Umlenkrolle.

Pos. 5: Vorschaltgerät: Ist eine an die Leistung des UV-Brenners angepasste Drossel mit Zündgerät. Bei grösseren Kabellängen wird das Zündgerät am Aushärtkorb montiert. Um die Stromaufnahme in der Zuleitung möglichst gering zu halten, ist im Kasten eine Kompensation eingebaut. Anschlüsse steckbar. Ausführung spritzwassersicher.

Pos. 6: Bottich: Fassungsvermögen variabel, Stromkabellänge variabel.

Pos. 7: Luftschlauch

Pos. 8: Luftpumpe

Pos. 9: Packer mit Anschluss für Luft und Gleitbuchse für Stromkabel.

Pos. 10: Zu sanierende Leitung

Pos. 11: In-Liner

Pos. 12: Aushärtkorb: Für Rohrdurchmesser von 100 - 1000 mm variabel. Grösser mit Spezialkonstruktion.

Pos. 13: UV-Brenner; ist ein handelsüblicher ULTRAMED Halogen-Metalldampfstrahler, dessen Strahlungsfluss in der Spitze bei 370 nM liegt. Die Leistung ist variabel erhältlich, d.h. für jeden Rohrdurchmesser anzupassen, ev. Kombination.

12/13: Vorteile: Der Aushärtkorb ist gegenüber bekannten Selbstfahrwagen:

1. Viel leichter und handlicher,

2. Unüberbietbare gleichmässige Bescheinung des Aushärtgutes, und im Zusammenhang mit der Kontinuität der Zugeinrichtung ergibt dies eine unübertreffbare Qualität des In-Liners.

3. Ueberrollunempfindlich, die Konstruktion bietet allseitig den gleichen Abstand vom Rohrboden und kann somit unbeschadet weitergezogen werden. (Umkippen eines Selbstfahrwagens kann die ganze bisher geleistete Arbeit vernichten).

4. Kann in Horizontal-, Schräg- und Vertikallage verwendet werden, ja sogar in Horizontal- oder Vertikalbögen, was mit allem Bisherigem nicht möglich ist.

Pos. 14: Packer mit Gleitbuchse für Zugschnur und einstellbarem Luftaustritt.

Pos. 15: Umlenkrolle an Packer.

Pos. 16: Umlenkrolle an Schnurzug.

Pos. 17: Anpressrolle

Pos. 18: Gebtriebemotor mit Zugrolle für Schnur.

Pos. 19: Antrieb für Schnurhaspel.

Pos. 20: Schnurhaspel mit permanentmagnetischer Antriebscheibe. Durch Verstellen des Luftspaltes zwischen Haspel und Antriebscheibe kann die Zugkraft fein eingestellt werden. Durchmesser des Haspels mit Schnur ist variabel. Die daraus resultierende Unsynchronität wird somit über den magnetischen Schlupf ausgeglichen.

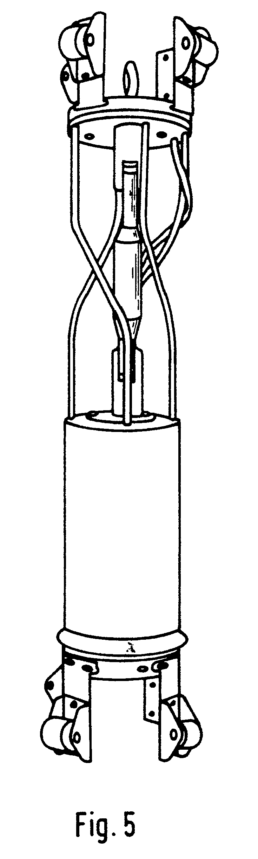

Schliesslich ist, in Figur 5, eine bevorzugte Ausführungsform derjenigen beschriebenen UV-Strahlenquelle fotographisch dargestellt, die den Strahler in einem Käfig enthält.

Deutlich sichtbar sind die abgeschrägten Gitterstäbe im Bereich des Strahlers. Stäbe, die in Fahrtrichtung der Strahlenquelle liegen, ergeben im Harz Linien unvollständig ausgehärteter Konsistenz.

Die Anwendung des erfindungsgemässen Mehrschichten-Kunststoffschlauches, speziell mit Armierungsschichten, die auf spezifische Röhren ausgerichtet sind, wird nun anhand der folgenden drei Beispiele näher beschrieben.

1. Innenerneuerung einer defekten Wasserleitung mit $\emptyset_i$ 280 mm.

Dieser ca. 9 m lange Leitungsteil wies eine Krümmung von ca. 10° auf, auch hier diente eine Muffe zur Realisierung der Krümmung.

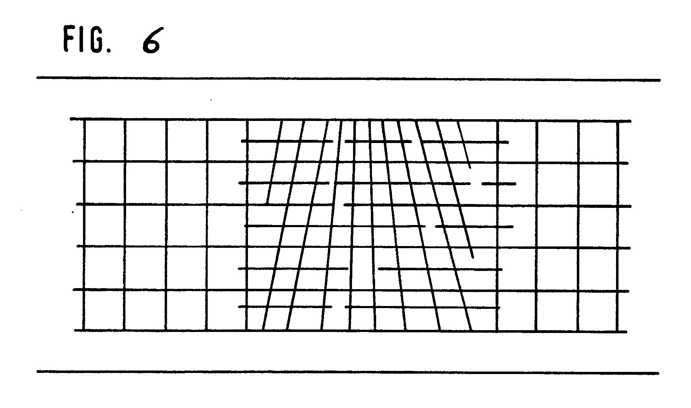

Mittels eines analogen Ausbesserungsschlauches wurde die Leitung abgedichtet und repariert. Die benutzte Armierung ist schematisch und flächenprojiziert in Figur 7 dargestellt.

2. Innenerneuerung einer defekten Wasserleitung von $\emptyset_i$ 200 mm, in einer Tiefe von 7 m unter Boden.

In diesem Fall wurden vorerst die notwendigen Berechnungen aufgrund von eigens entwickelten Programmen gemacht und die Innenausbesserung anschliessend dementsprechend ausgeführt:

Die Leitung ist beschädigt. Teilweise ist die Statik durch Verminderung der Wandstärken reduziert. Deshalb sind die Normen in Bezug auf die Belastungsfähigkeit der Leitung nicht mehr erfüllt. Zudem ist es unmöglich, die noch vorhandenen Materialstärken zu bestimmen.

Für diese Annahme wurde ein Berechnungsmodell entwickelt. Die Ausgangslage ist, dass die Leitung keine Kräfte mehr aufnimmt. Sämtliche Belastungen aus Erdreich und Verkehrslasten wirken auf das erfindungsgemässe, ausgehärtete Innenausbesserungsrohr.

Im Modell wird weiter angenommen, dass die Leitung im Baugrund liegt und Belastungen durch Raddrücke möglich sind. Das Erdmaterial über der Leitung kann nur schwach gehalten werden. Der hydrostatische Druck ist auf dem Maximum und das vorhandene Wasser führt zu keinem Auftrieb des Bodenmaterials. Dieses Modell entspricht vermutlich den schwierigsten Bedingungen, die auf eine Leitung einwirken können.

Die Ergebnisse der Messungen zeigen, dass Leitungen, die nahe der Oberfläche, bzw. tief im Erdreich liegen, hohe Drücke aufnehmen müssen. Wird die Tiefe vergrössert, erhöhen sich die hydrostatischen wie die Erdreichdrücke. Dabei nimmt jedoch der Einfluss der Verkehrslasten auf die Leitungen ab. Das Minimum beider Krafteinflüsse liegt ca. bei 1 m unter der Oberfläche. Für tiefere Lagen erhöht sich der Druck, weil gleichzeitig der hydrostatische wie auch der Erddruck zunehmen. Bei extrem hohen Lagen der Leitungen erhöhen sich die Drücke durch mögliche Verkehrsbelastungen.

Deshalb wurde angenommen, dass Leitungen immer tiefer als 1 m unter der Oberfläche liegen. Direkte Radbelastungen auf die Leitungen sind somit ausgeschossen. Weiterhin wurde ein Extremfall konstruiert, mit der Annahme, dass eine Leitung in einer Tiefe von 7 m liegt. Die Tiefe von 7 m wurde als die kritischste Situation vorgegeben.

Die Analyse zeigt, dass eine Leitung in dieser Tiefe einem bestimmten Druck standhalten muss.

Mit vertretbaren Annahmen, so zeigen die Untersuchungen, können innerhalb des erfindungsgemässen Systems derartige schadhafte Leitungen mit Wandstärken von 2,5 mm zuverlässig saniert werden.

Insbesondere gilt es dabei abzugrenzen, welche Kräfte vom sanierungsbedürftigen, teilweise geschädigten Kanal weiterhin übernommen werden, und welche Kräfte vom innenliegenden Faserverbundwerkstoff aufgenommen werden sollen. In besonderen Fällen gilt es abzuklären, welche äusseren Belastungen das Rohr aufzunehmen hat. Die Abgrenzungen der einzelnen Funktionen im gesamten System können zu unterschiedlichen Gestaltungen des Faserverbundwerkstoffes führen.

Für solche besonderen Fälle ist es möglich, auch mit dem oben genannten Computerprogramm entsprechende Berechnungen anzustellen.

Beim Vorliegen der Werte ist es dann möglich, das Ausbesserungs-Rohr mit den gewünschten Spezifikationen herzustellen.

Schliesslich seien noch die Aufbauten von zwei typischen Ausbesserungschichten in erfindungsgemäss innenerneuerten Leitungen beschrieben:

**Patentansprüche**

1.  Mehrschichten-Kunststoffschlauch zur Verwendung in Erneuerungen von auch nichtbegehbaren Leitungen unter Beachtung der Funktionen Abdichtung einerseits und Verstärkung andererseits sowie zur Anpassung an spezielle Gegebenheiten der auszubessernden Leitung, hergestellt durch Verschweissen oder Verkleben einer Mehrschichten-Kunststoffplane, diese enthaltend eine im Anwendungssinn äussere flüssigkeits-, gas- und UV-strahlenundurchlässige Folie, eine im Anwendungssinn mittlere mit aushärtbarem Harz tränkbare Armierungsschicht und - gegebenenfalls - eine im Anwendungssinn innere UV-strahlendurchlässige Kunststofffolie, dadurch gekennzeichnet, dass
- die mittlere Armierungsschicht ein gewebeförmiges Material in Form eines Glasfaser-Grundgewebes mit Glasfaser-, Kunststoff- oder Naturfaser-Tufting ist, und dass
- das gewebeförmige Material auf die äussere Folie aufkaschiert ist,
wobei das genannte gewebeförmige Material UV- strahlendurchlässig ist.

2. Mehrschichten-Kunststoffschlauch gemäss Patentanspruch 1, weiter dadurch gekennzeichnet, dass die mittlere Armierungsschicht in Form von Längs- und Quer-Fäden mit Abständen, Zwischenräumen und Unterbrechungen vorliegt.

3. Verwendung des Mehrschichten-Kunststoffschlauches gemäss Patentanspruch 1 zur Erneuerung einer auch nichtbegehbaren Rohrleitung durch Innenbeschichten derselben, wobei der Schlauch bzw. die Plane vorgängig bei einem Druck von 0,4 bis 1 mal dem Aussendruck im Harzbad und unter Abquetschung ebenfalls im Bad getränkt wird, wobei der Reparaturschlauch mittels Luft oder Stickstoff bei einem Ueberdruck von 0,01 bis 0,4 bar, gegebenenfalls unter Verwendung von gekühlten Gasen, nach Einziehen in die zu erneuernde Leitung positioniert wird, wobei die Bestrahlung mittels des Bestrahlungsroboters schattenlos geschieht und das zur Positionierung verwendete und dabei aus der Anlage austretende Gas auf Temperatur, Druck und Zusammensetzung untersucht wird, wobei die UV-Strahlenquelle zwecks Aushärtung des photopolymerisierbaren Harzes im Reparaturschlauch mehrmals durch denselben gezogen wird, wobei jeweils nur auf dem Hinweg bestrahlt wird, wobei die Strahlenquelle radial und axial gleichförmig, d.h. schattenfrei, abstrahlt und wobei schliesslich der Ueberdruck bei der Aushärtung > 0,01 bar, die Laufgeschwindigkeit des Bestrahlungsroboters > 1 m/min und die maximale Temperatur in der Leitung an der Aushärtestelle < 90° C betragen,

wobei die Anpassung und/oder Optimierung des Reparaturschlauches unter Trennung der Funktionen Abdichtung einerseits und Befestigung bzw. Verstärkung andererseits sowie, unter Einhaltung einer minimalen Wandstärke des Mehrschichten-Reparaturschlauches, ausgeführt wird.

4. Verwendung gemäss Patentanspruch 3, dadurch weiter gekennzeichnet, dass n ≧ 2 Mehrschichten-Kunststofferneuerungsschläuche eingesetzt werden, wobei zwischen den einzelnen Erneuerungsschläuchen kraftschlüssige Verbindungen, z.B. mittels Verklebungen oder Einbau von festen Verbindungsbrücken, geschaffen werden.

5. Verwendung gemäss Patentanspruch 3, dadurch weiter gekennzeichnet, dass bei Anwendungen auf gewölbten Unterlagen die jeweiligen Lagen, Stärken und Unterbrüche von Schuss und Kette in der mittleren Armierungsschicht den geometrischen Gegebenheiten der Unterlage und den gesuchten Festigkeiten angepasst sind.

6. Verwendung des Mehrschichten-Kunststoffschlauches gemäss Patentanspruch 3 zur Innen-Erneuerung von Leitungen auch bei geringen Durchmesserveränderungen und leichten Krümmungen der Leitungen.

**Claims**

1. Multi-layer plastic hose for use in renewals of even pipes through which it is not possible to walk, taking into consideration the functions of sealing on the one hand and strengthening on the other hand as well as for adaptation to specific factors of the pipe to be repaired, produced by welding or sticking a multi-layer plastics sheet, the latter containing an outer film in the direction of application, which is impermeable to liquids, gas and UV-rays, a middle reinforcing layer in the direction of application, which can be impregnated with hardenable resin and - possibly - an inner plastic sheet in the direction of application, which is permeable to UV-rays, characterised in that
- the middle reinforcing layer is a fabric-like material in the form of a glass fibre backing fabric with glass fibre, plastic or natural fibre tufting, and that
- the fabric-like material is laminated on the outer film,
the said fabric-like material being permeable to UV-rays.

2. Multi-layer plastic hose according to Patent Claim 1, further characterised by the fact that the middle reinforcing layer is in the form of longitudinal and transverse threads with intervals, gaps and interruptions.

3. Use of the multi-layer plastic hose according to Patent Claim 1 for the renewal even of a pipe line through which it is not possible to walk, by internal coating thereof, the hose or the sheet being previously impregnated at a pressure of 0.4 to 1 times the external pressure in the resin bath and by squeezing out likewise in the bath, the repair hose being positioned by means of air or nitrogen at an excess pressure of 0.01 to 0.4 bars, possibly using cooled gases, after being drawn into the pipe to be renewed, the irradiation taking place without shadows by means of the irradiation robot and the gas used for positioning and in this case escaping from the installation being investigated as regards temperature, pressure and composition, for the purpose of hardening of the photo-polymerisable resin in the repair hose, the source of UV-rays is drawn several times through the latter, irradiation occurring respectively solely on the way out, the source of rays emitting radiation radially and axially uniformly, i.e. without shadows and finally the excess pressure upon hardening amounting to > 0.01 bars, the speed of travel of the irradiation robot amounting to > 1 m/min and the maximum temperature in the pipe at the hardening point amounting to < 90 °C, the adaptation and/or optimization of the repair hose being carried out by separating the functions of sealing on the one hand and strengthening or reinforcement on the other hand, as well as whilst maintaining a minimum wall thickness of the multi-layer repair hose.

4. Use according to Patent Claim 3, further characterised by the fact that n ≥ 2 multiple layer plastic replacement hoses are used, frictional connections, for example by means of sticking or the incorporation of solid connecting bridges, being created between the individual renewal hoses.

5. Use according to Patent Claim 3, further characterised in that when used on curved supports, the respective layers, thicknesses and interruptions of weft and warp in the middle reinforcing layer are adapted to the geometric factors of the backing and the desired strengths.

6. Use of the multi-layer plastic hose according to Patent Claim 3 for the internal renewal of pipes even in the case of small diameter variations and slight curvatures of the pipes.

**Revendications**

1. Tuyau souple en matière plastique, à plusieurs couches, destiné à être utilisé dans des travaux de rénovation de conduites ne se prêtant pas au passage de personnes, en tenant compte des fonctions d'étanchéité, d'une part, et de renforcement d'autre part, et destiné à l'adaptation aux conditions particulières de la conduite à rénover, réalisé par soudage ou par collage d'une nappe de matière plastique à plusieurs couches, laquelle contient une feuille, extérieure dans le sens de l'application, qui est perméable aux liquides, gaz et rayonnement UV, une couche d'armature, médiane dans le sens de l'application, imprégnable par de la résine durcissable, et éventuellement une feuille de matière plastique, intérieure dans le sens de l'application, qui est perméable aux rayons UV, caractérisé par le fait que
   - la couche d'armature médiane est un matériau du genre tissu sous la forme d'un tissu de base à fibres de verre, avec Tufting de fibres de verre, de matière plastique ou de fibres naturelles, et,
   - le matériau de genre tissu est plaqué sur la feuille extérieure,
   ledit matériau du genre tissu étant perméable au rayonnement UV.

2. Tuyau souple en matière plastique, à plusieurs couches, selon revendication 1, caractérisé en outre par le fait que la couche d'armature médiane se présente sous la forme de fils longitudinaux et transversaux avec intervalles, volumes intermédiaires et interruptions.

3. Utilisation du tuyau souple en matière plastique à plusieurs couches selon revendication 1 pour la rénovation d'une conduite tubulaire ne se prêtant pas au passage de personnes, par enduction intérieure de celle-ci, le tuyau souple ou encore la nappe étant d'abord, en présence d'une pression de 0,4 à 1 fois la pression extérieure, imprégné dons le bain de résine et essoré également dans le bain, le tuyau souple de réparation étant, après introduction dans la conduite à rénover, positionné au moyen d'air ou d'azote avec une surpression de 0,01 à 0,4 bars, éventuellement en utilisant des gaz refroidis, l'irradiation au moyen du robot d'irradiation s'effectuant sans ombre, et le gaz utilisé pour le positionnement, sortant alors de l'installation, étant contrôlé quant à sa température, sa pression et sa composition, la source de rayonnement UV étant, aux fins de durcissement de la résine photopolymérisable dans le tuyau souple de réparation, amenée à passer plusieurs fois par celui-ci, l'irradiation n'étant faite à chaque fois que lors du trajet d'aller, la source de rayonnement rayonnant radialement et axialement de manière uniforme, c'est-à-dire sans ombre, et, enfin, la surpression lors du durcissement étant > 0,01 bar, la vitesse de déplacement du robot d'irradiation étant > 1 m/min et la température maximale dons la conduite, au point de durcissement, étant < 90 ° C.

l'adaptation et/ou l'optimisation du tuyau souple de réparation étant réalisée(s) tout en séparant les fonctions d'étanchéité, d'une part, et de fixation ou de renforcement, d'autre part, ainsi qu'en respectant une épaisseur de paroi minimale du tuyau souple en matière plastique à plusieurs couches.

4.  Utilisation selon revendication 3, caractérisée en outre par le fait que l'on utilise n ≥ 2 tuyaux souples de rénovation en matière plastique, à plusieurs couches, des liaisons mécaniques étant créées entre les tuyaux de rénovation individuels, par exemple au moyen de collages ou par montage de ponts d'assemblage fixes.

5.  Utilisation selon revendication 3, caractérisée en outre par le fait que, dans le cas d'application à des supports arqués, les couches, épaisseurs et interruptions de trame et de chaîne dans la couche d'armarture médiane sont adaptées aux conditions géométriques du support et aux caractéristiques de résistance recherchées.

6.  Utilisation du tuyau souple en matière plastique à plusieurs couches selon revendication 3 pour la rénovation intérieure de conduites, même dans les cas où les conduites ont de faibles variations de diamètre et de légères courbures.

Fig.1

Fig.2

9

Fig. 3

Fig. 4

Fig. 5

FIG. 6